# EUROPEAN PATENT SPECIFICATION

(11) **EP 3 874 549 B1**
(45) Date of publication and mention of the grant of the patent: **12.06.2024**
(21) Application number: 19877894.6
(22) Date of filing: 31.10.2019
(51) Int. Cl.: H01M 10/0525, H01M 10/613, H01M 10/625, H01M 10/653, H01M 50/213, H01M 50/224, H01M 50/505, H01M 50/227, H01M 50/229, H01M 50/24, H01M 50/244, H01M 50/264

(54) **HOLDER STRUCTURE FOR ENERGY STORAGE CELLS IN AN ENERGY STORAGE DEVICE**
HALTERSTRUKTUR FÜR ENERGIESPEICHERZELLEN IN EINER ENERGIESPEICHERVORRICHTUNG
STRUCTURE DE SUPPORT POUR CELLULES DE STOCKAGE D'ÉNERGIE DANS UN DISPOSITIF DE STOCKAGE D'ÉNERGIE

(30) Priority: 02.11.2018 IN 201841041562
(43) Date of publication of application: 08.09.2021
(73) Proprietor: TVS Motor Company Limited, Chennai 600006 (IN)
(72) Inventor: VINAY CHANDRAKANT, Harne, Chennai 600 006 (IN); SUBRAMONIAM, Chithambaram, Chennai 600 006 (IN); GARG, Manish, Chennai 600 006 (IN); SANTOSH BHAGAWAT, Gavhane, Chennai 600 006 (IN); V S KUMAR, Gundavarapu, Chennai 600 006 (IN)
(74) Representative: Patentanwaltskanzlei Matschnig & Forsthuber OG
(86) International application number: PCT/IN2019/050802
(87) International publication number: WO 2020/089937

(56) References cited:
- WO-A1-2018/150672
- IN-A- 6271C HN2 014
- IN-A- 6271C HN2 014
- JP-A- 2016 207 569
- US-A1- 2018 205 048
- US-A1- 2018 205 048

## Description

### TECHNICAL FIELD

The present subject matter relates to an energy storage device. More particularly, the present subject matter relates to a holder structure for a plularity of energy storage cells in the energy storage device.

### BACKGROUND

Conventionally, lead-acid batteries are a useful power source for starter motors for internal combustion engines. However, their low energy density, and their inability to dissipate heat adequately, makes them an impractical power source for an electric vehicle. Particularly, an electric vehicle using lead acid batteries has a short range before requiring recharge and contain toxic materials. In addition, electric vehicles using lead-acid batteries have sluggish acceleration, poor tolerance to deep discharge, and a battery lifetime of only about 20,000 miles. Thus, energy storage packs that contain lithium ion batteries are increasingly popular with automotive applications and various commercial electronic devices because they are rechargeable, lightweight and comprises high energy density. However, storing and operating the energy storage pack with lithium ion batteries at an optimal operating temperature is very important to allow the battery to maintain a charge for an extended period of time. WO2018/150672 A1 discloses a battery having thermal diffusivity and anti-vibration property.

A known battery pack comprises a battery unit composed of a plurality of energy storage cells electrically connected with one another by either series or parallel connection, or a combination of series connection and parallel connection. Typically, the battery pack comprises one or more holder structure made up of materials exhibiting excellent thermal conductivity. The holder structure for such battery packs are adapted for holding one or more energy storage cells. However, during operative condition of the battery pack, the current flows through the batteries to power the vehicle. As current is drawn off the batteries, heat is generated within the battery pack. Also, during charging of the battery pack, heat is likewise accumulated during the charging process. The heat generated during discharge of the batteries as well as charging of the batteries, leads to increased temperatures causing a severe effect on the life expectancy and performance of the batteries. Thus, when one or more energy storage cell goes into thermal runaway, either through violation of safe temperature limit, manufacturing process induced cell short circuit, over charge, or external impact from vehicle crashes, the amount of energy released may cause adjacent energy storage cells to also go into thermal runaway, this chain reaction destroys the battery pack and place the vehicle passengers in great physical danger.

### BRIEF DESCRIPTION OF THE DRAWINGS

The detailed description is described with reference to the accompanying figures. The same numbers are used throughout the drawings to reference like features and components.
**Fig.1** is a perspective view of at least one energy storage pack, as per one embodiment of the present invention.
**Fig.2** is an exploded view of said at least one energy storage pack, as per one embodiment of the present invention.
**Fig.3** is an exploded view of said at least one energy storage pack including at least one holder structure, as per one embodiment of the present invention.
**Fig. 4** is a perspective view of said at least one holder structure of said at least one energy storage pack of Fig. 3, as per one embodiment of the present invention.
**Fig. 5** is an exploded view of said at least one holder structure and plularity of energy storage cells of said at least one energy storage pack of Fig.4, as per one embodiment of the present invention.
**Fig. 6** is a perspective view of said at least one holder structure with said plularity of energy storage cells contained therein, as per one embodiment of the present invention.

### DETAILED DESCRIPTION

An existing energy storage device comprises at least one holder structure configured to hold one or more energy storage cells therein. Typically, said at least one holder structure is made up of a rigid member in the form of a metal of high conductivity. In such energy storage device, cooling structures in the form of fins are formed in at least a portion of sidewalls of said at least one holder structure. Thus, the heat generated during charging and discharging process of said plularity of the energy storage cells is effectively dissipated through said cooling structures. However, since said at least one holder structure is made up of metal, preferably aluminum, therefore due to direct contact of said metal and said one or more energy storage cells the heat generated during charging and discharging process of said plularity of the energy storage cells results in electric short circuit between cells and other one or more electrical parts including interconnect plates, thereby damaging the energy storage device because of thermal impact to adjacent cells and hence the inception of a chain reaction.

In a known arrangement of said plularity of energy storage cells in the energy storage device, the presence of air surrounding the cells acts as a bad conductor of heat and hence due to which there is no heat transfer from said plularity of the cells to an outer casing structure of the energy storage pack and hence because of which the cooling of the entire energy storage device becomes difficult. In such arrangement, due to the absence of adequate cooling mechanism the high amount of heat generated during the charging and discharging of said at least one energy storage device reduces the life and performance of said one or more energy storage cells of said plularity of energy storage cells. Furthermore, after discharging of said one or more energy storage cells immediate recharging of said energy storage cells is not possible when temperature of said one or more energy storage device is equal or more than 50°C. Moreover, in said arrangement of said plularity of the energy storage cells in the energy storage device, specifically when electric short circuit takes place inside the energy storage pack, the presence of air inside the energy storage device results in the fire propagation inside the pack, thus resulting in the damage of the entire energy storage device.

In another known structure for supporting said plularity of energy storage cells in the energy storage device, one or more energy storage cells including the lithium-ion battery cells are electrically connected by one or more interconnect plates through welding. However, due to the conventional design of the holder structure, the one or more energy storage cells are not securely positioned therein and hence the welding process for electrically connecting said energy storage cells results in dislocation of cells, thereby resulting in failure of the functioning of said energy storage device.

With the above objectives in view and to overcome all of the above stated problems, the present invention provides an improved design of said at least one holder structure for the energy storage device that mitigates the thermal runway and protects the energy storage device from damage and also provides an effective cooling mechanism for said one or more energy storage cells of the energy storage device. More particularly, but not exclusively, this invention relates to a novel and improved design of said at least one holder structure of the energy storage device for mitigation of a thermal runaway event in the energy storage device including a plularity of energy storage cells. As per one embodiment, the present invention outlines improvements relating to said at least one holder structure adapted for holding said plularity of energy storage cells in the secured position, to within accepted tolerances, even during charging and discharging of said plularity of energy storage cells.

The present invention relates to said at least one energy storage device comprising a plurality of energy storage cells being lithium-ion battery cells and at least one holder structure adapted to store said one or more energy storage cells of said plurality of energy storage cells. Said at least one holder structure includes at least one non-rigid member being a flexible resin material including rubber and being overmolded to at least one rigid frame structure. Said at least one non-rigid member includes one or more receiving portions dimensioned to receive at least a portion of said one or more energy storage cells therein. The plurality of energy storage cells includes a lithium ion battery configured to be secured in said one or more receiving portions in one or more configuration such as series and parallel combination.

According to the invention, said at least one holder structure comprises at least one rigid frame member and at least one non-rigid member. Said at least one non-rigid member is defined by the flexible resin material in the form of the rubber. Said at least one non-rigid member comprises one or more receiving portions such that, in use, said at least one non-rigid member is configured to hold said one or more energy storage cells. Since said one or more energy storage cells are secured in said one or more receiving portions of said at least one holder structure, thus the direct contact of said one or more energy storage cells with said at least one rigid frame member is prevented. As per one embodiment, the prevention of the direct contact of said plularity of the energy storage cells with said at least one rigid frame member of said at least one holder structure provides a good thermal contact of said one or more energy storage cells with said at least non-rigid member, provides an effective cooling mechanism and promotes long life of the entire said at least one energy storage device. Furthermore, as per one embodiment, said at least one non-rigid member in the form of rubber has better vibrations absorbing property, thereby protecting said plularity of energy storage cells from vibrations when secured in said one or more receiving portions. In one embodiment of the present invention, said at least one non-rigid member is thermally conductive, electrically isolative and fire retardant rubber. Further, as per one embodiment of the present invention, said at least one non-rigid member being overmolded to said at least one rigid frame member, is a fire retardant rubber material and hence prevents fire to propagate when caused. Moreover, said at least one non-rigid member of said at least one holder structure of said rubber material comprises of said one or more receiving portions. In one embodiment, said one or more receiving portions includes one or more slits formed therebetween. The one or more slits are configured to accommodate oversizing of said one or more energy storage cells along at least one dimension thereof during thermal expansion, contraction or vibrations in the heating and cooling process of the said at least one energy device respectively. Additionally, said one or more slits are configured to accommodate said one or more energy storage cells in said at least one holder structure having non-uniform dimensions of said one or more receiving portions due to any manufacturing defect therein. As per one embodiment, said at least one holder structure is configured to be in direct contact with said outer casing through one or more fasteners. In another embodiment of the present invention said at least one holder structure is configured to be in direct contact with said outer casing through at least one thermally conductive member. Further, as per one embodiment, heat generated by said one or more energy storage cells of the plularity of the energy storage cells is conducted to said at least one rigid frame member made up of metal. Since, said at least one rigid frame member is in direct contact with said outer casing of said at least one energy storage pack, hence said at least one energy storage device is cooled by the air flowing around said at least one energy storage pack. More particularly, said improved design for said at least one holder structure when accommodated in said outer casing of said at least one energy storage pack is configured to minimize the presence of air in said at least one energy storage pack, thereby reducing the risk of fire in said at least one energy storage device.

As per one embodiment of the present invention, the improved design for said at least one holder structure includes at least one non-rigid member including a flexible resin such as rubber material overmolded on the rigid frame member. In one embodiment of the present invention, said at least one non-rigid member comprises of the flexible resin in the form of the rubber which is thermally conductive but electrically isolative and fire retardant. Therefore, said flexible resin in the form of the rubber of said predetermined thickness in the range of 0.5 to 2 mm is overmolded to said at least one rigid frame member so as to prevent direct contact of said one or more energy storage cells with said at least one rigid member which is the metal, thereby minimizing the risk of electrical short-circuits between said one or more energy storage cells and hence damage to said at least one energy storage device. Thus, one embodiment of the present invention, provides an improved design for the said at least one holder structure for the energy storage device for mitigating propagation of a thermal runaway event by having the capability of detaching of overheating said one or more energy storage cells that have over voltages, over current from direct contact with said rigid frame member made up of metal, during heat generation in charging and discharging of said one or more energy storage cells. In one embodiment, said at least one rigid frame member is made up of aluminum metal and said non-rigid member is made of flexible resin including rubber.

Further, as per one embodiment of the present invention, since said at least one non-rigid member of said at least one holder structure is configured to hold said one or more energy storage device, thus said one or more energy storage cells are secured in said one or more receiving portions of said at least one non-rigid member in a predetermined position and hence facilitates in precise welding of said one or more interconnect plates to said plularity of the energy storage cells.

As per one embodiment, said at least one non-rigid member such as rubber prevents said one or more energy storage cell of said plularity of cells from direct contact with said at least one rigid frame member including the metal, thereby mitigating thermal runway and short circuit between the cells due to heat generated during charging and discharging of said one or more energy storage cells.

Various other features and advantages of the invention are described in detail below with reference to the accompanying drawings. In the drawings, like reference numbers generally indicate identical, functionally similar, and/or structurally similar elements. The drawing in which an element first appears is indicated by the leftmost digit(s) in the corresponding reference number. With reference to the accompanying drawings, wherein the same reference numerals will be used to identify the same or similar elements throughout the several views. It should be noted that the drawings should be viewed in the direction of orientation of the reference numerals.

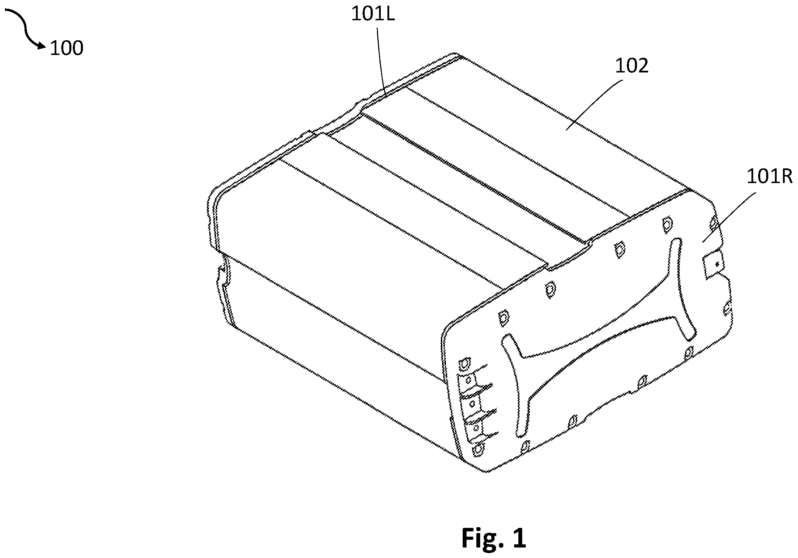

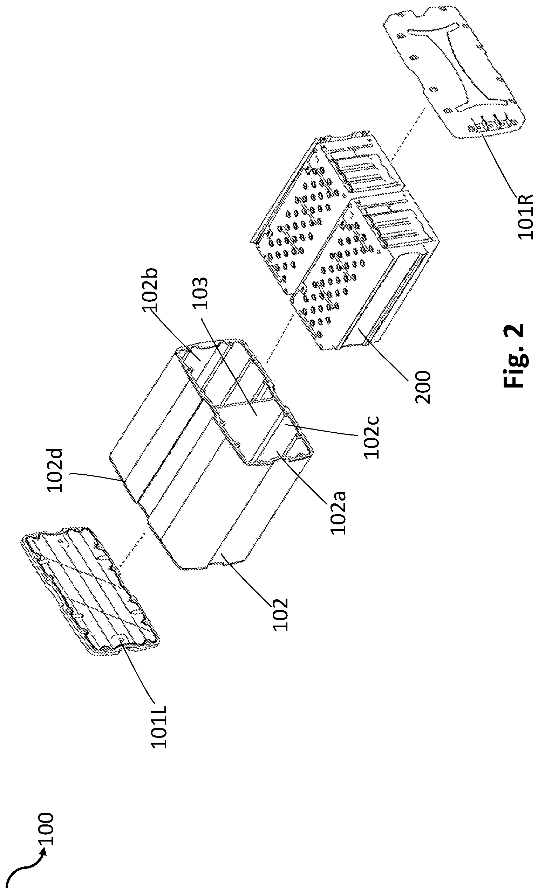

**Fig.1** is a perspective view of said at least one energy storage pack (100), as per one embodiment of the present invention. In one embodiment, said at least one energy storage pack **(100)** includes an outer casing structure **(102)** to accommodate one or more energy storage devices **(200)** (shown in Fig.2) therein. The outer casing structure **(102)** for said at least one energy storage pack **(100)** includes a pair of left and right cover members **(101L) (101R).**

**Fig.2** is an exploded view of said at least one energy storage pack (100), as per one embodiment of the present invention. In one embodiment, said outer casing structure **(102)** adapted to accommodate said at least one energy storage device **(200)** therein comprises the pair of left and right cover members **(101L) (101R)** adapted to cover said at least one open side **(102c), (102d)** of said at least one energy storage pack **(100).** In one embodiment, said outer casing is divided into one or more chambers **(102a), (102b)** through at least one partition member **(103)** to accommodate at least one energy storage device **(200)** therein in series configuration. In another embodiment of the present invention, said outer casing structure **(102)** is divided into said one or more chambers **(102a), (102b)** therein in parallel configuration.

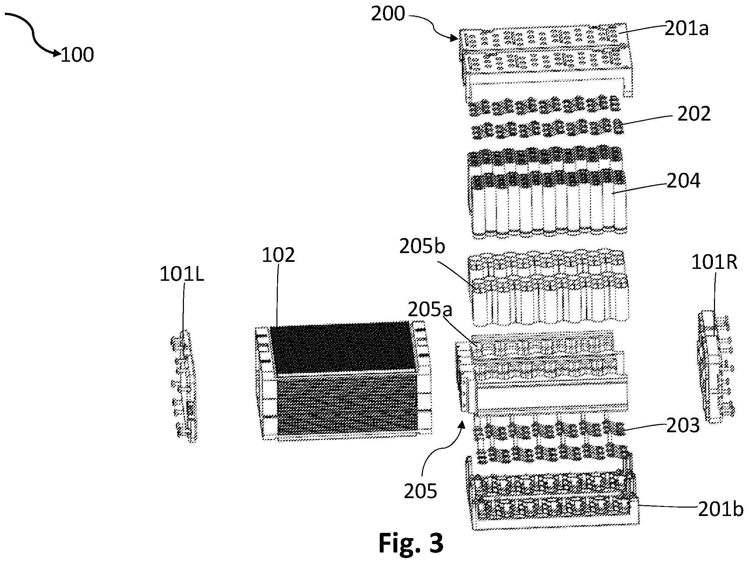

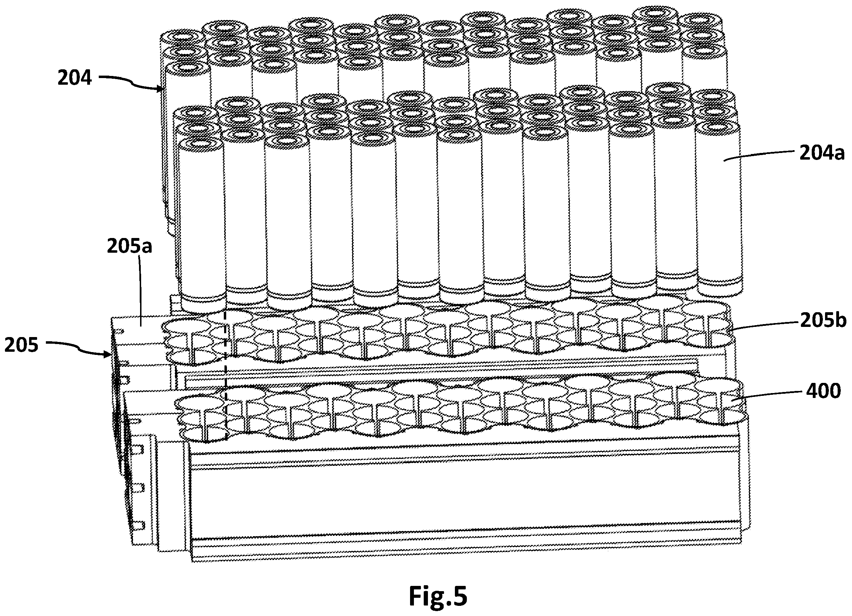

**Fig.3** is an exploded view of the energy storage pack **(100)** including at least one holder structure **(205),** as per one embodiment of the present invention. As per one embodiment of the present invention, said at least one energy storage device **(200)** of said at least one energy storage pack **(100)** comprise the plurality of energy storage cells **(204)** and said at least one holder structure **(205)** adapted to store one or more energy storage cells **(204a) (shown in** **Fig 5****)** of said plurality of energy storage cells **(204).** In one embodiment, said at least one holder structure **(205)** includes at least one non-rigid member **(205b)** overmolded to said at least one rigid frame member **(205a).** In one embodiment, said plurality of energy storage cells **(204)** are electrically connected with each other through one or more interconnect plates **(202), (203).** As per one embodiment, said one or more interconnect plates **(202), (203)** electrically connect said plurality of energy storage cells **(204)** with each other and to a battery management system (BMS) (not shown) through an upper holder member **(201a)** and a lower holder member **(201b).** In one embodiment, said at least an upper portion of said plurality of energy storage cells **(204)** are electrically connected through said one or more interconnect plates **(202), (203)** on said upper holder member **(201a)** and said lower holder **(201b)** to establish an electrical connection between said plurality of energy storage cells and said battery management system (BMS) (not shown) of said at least one energy storage device **(200).**

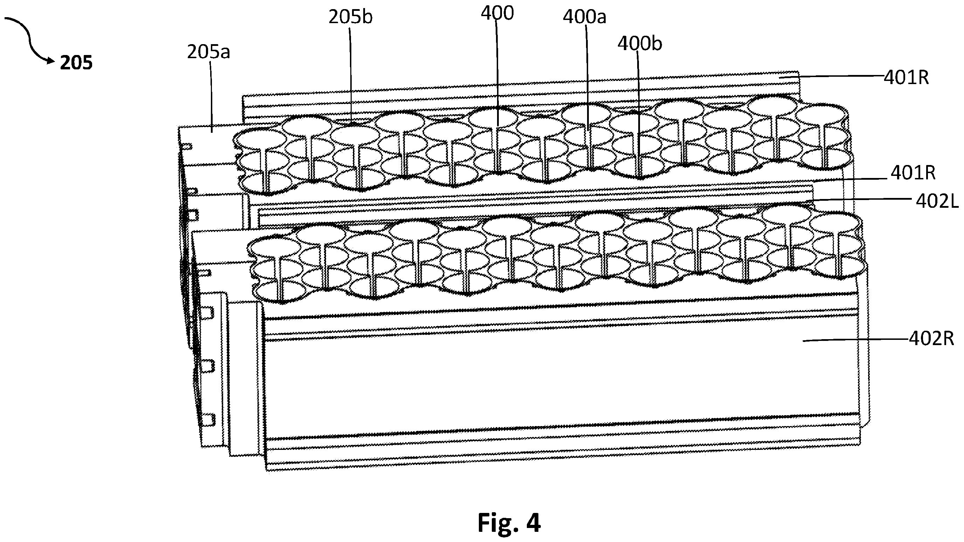

**Fig. 4** is a perspective view of said at least one holder structure **(205)** of the energy storage pack **(100)** of Fig. 3, as per one embodiment of the present invention. In one embodiment of the present invention, said at least one holder structure **(205)** of said at least one energy storage device **(200)** is adapted to hold. one or more energy storage cells **(204a)** of said plurality of energy storage cells **(204).** As per one embodiment, said at least one holder structure **(205)** includes said at least one non-rigid member **(205b)** overmolded to said at least one rigid frame member **(205a).** In one embodiment, said at least one non-rigid member **(205b)** includes said one or more receiving portions **(400)** dimensioned to receive at least a portion of said one or more energy storage cells **(204)** therein. As per one embodiment, said one or more receiving portions **(400)** includes one or more slits **(400a), (400b)** formed in at least a portion therein. More particularly, as per one embodiment, said one or more slits **(400a), (400b)** are configured to accommodate oversizing of said one or more energy storage cells **(204a)** along a length thereof during charging and discharging process of said plularity of energy storage cells **(204).** Further, in one embodiment, said plurality of energy storage cells **(204)** includes a lithium ion battery configured to be secured in said one or more receiving portions **(400)** in one or more configuration. The one or more receiving portions **(400)** comprises a radial diameter slightly greater than the dimension of said one or more energy storage cells **(204a)** of said plurality of energy storage cells **(204).** Further in **Fig.4****,** as per one embodiment, said at least one non-rigid member **(205b)** is a flexible resin material including a rubber configured to be overmolded to said at least one rigid frame member such that said rigid member **(205a)** forms at least one side wall **(401R), (401L), (402R), (402L)** of said non-rigid member **(205b)** of said at least one holder structure **(205).**

**Fig. 5** is an exploded view of said at least one holder structure **(205)** and said plurality of energy storage cells **(204)** of the energy storage pack **(100)** of Fig.4, as per one embodiment of the present invention. As per one embodiment, said at least one energy storage device **(200)** (shown in Fig.2) includes said at least one rigid frame member **(205a)** and said at least one non-rigid frame member **(205b).** In one embodiment, said at least one non-rigid member **(205b)** of said at least one holder structure **(205)** comprises said one or more receiving portions **(400)** formed in at least a portion thereof. In one embodiment, said one or more receiving portions **(400)** are configured to include radial diameter slightly greater than the dimension of said one or more energy storage cells **(204a)** of said plurality of energy storage cells **(204)** such that said one or more energy storage cells **(204a)** is secured in said at least one holder structure **(205)** of said at least one energy storage device **(200)** of said at least one energy storage pack **(100).**

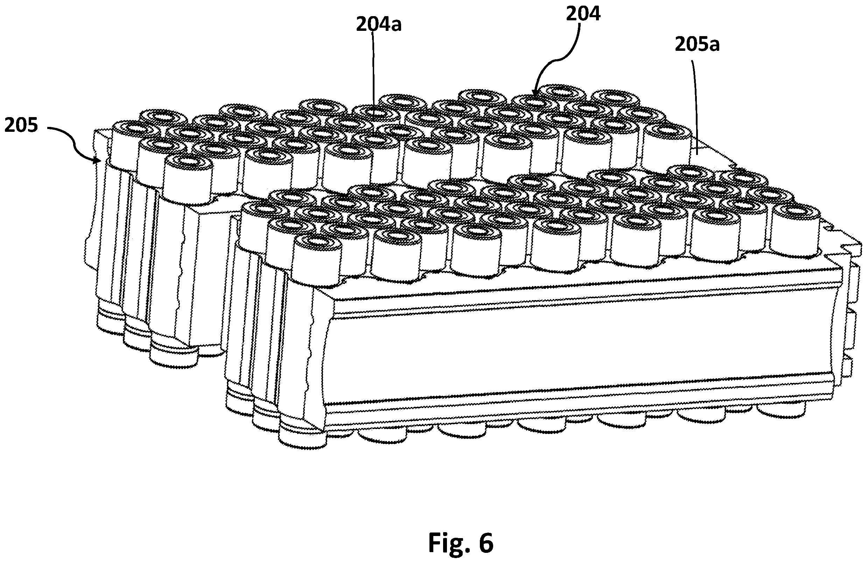

**Fig. 6** is a perspective view of said at least one holder structure **(205)** with said plularity of energy storage cells **(204)** contained therein, as per one embodiment of the present invention. As per one embodiment, said plularity of energy storage cells **(204)** are secured in position in said at least one holder structure **(205)** of said at least one energy storage device **(200)** (shown in Fig.2). In one embodiment of the present invention, said one or more energy storage cells **(204a)** of the plularity of the energy storage cells **(204)** are arranged in one or more configuration including series and parallel configuration.

Advantageously, an improved design for said at least one holder structure for said at least one energy device provides for a way of thermally balancing said plularity of energy storage cells of said at least one energy storage thus maximizing the longevity, efficiency and power. Furthermore, an improved design for said at least one holder structure for said at least one energy storage device both actively and passively cools said at least one energy storage device to help prevent propagation of an overheating in said at least one energy storage pack. Further, it is advantageous to provide said at least one holder structure for said at least one energy storage device which comprises of said at least one non-rigid member in the form of the thermally conductive rubber overmolded to the metal frame member, thereby maintaining the temperature of said one or more energy storage cells within a predetermined operating temperature range, which can ensure continuous recharging of the said at least one energy storage device with improved performance.

Improvements and modifications may be incorporated herein.

## Claims

1. An energy storage device (200), said energy storage device (200) comprising:
a plurality of energy storage cells being lithium-ion battery cells (204); and
at least one holder structure (205) adapted to store one or more energy storage cells (204a) of said plurality of energy storage cells (204);
wherein,
said at least one holder structure (205) includes at least one non-rigid member (205b), said at least one non-rigid member (205b) being overmolded to at least one rigid frame member (205a), enables said rigid frame member (205a) to form at least one side wall (401R, 401L, 402R, 402L) of said non-rigid member (205b) of said at least one holder structure (205);
said at least one non-rigid member (205b) being a flexible resin material including rubber, includes one or more receiving portions (400) to receive at least a portion of said one or more energy storage cells (204a), and
each of said plurality of energy storage cells (204) being configured to be secured in said one or more receiving portions (400) in one or more configurations.

2. The energy storage device (200) as claimed in claim 1, wherein said one or more receiving portions (400) being configured to have a diameter larger than a dimension of said one or more energy storage cells (204a) of said plurality of energy storage cells (204).

3. The energy storage device (200) as claimed in claim 1, wherein said at least one non-rigid member (205b) being a thermally conductive, electrically isolative, and fire retardant rubber.

4. The energy storage device (200) as claimed in claim 1, wherein said at least one rigid frame member (205a) being a thermally conductive metal.

5. The energy storage device (200) as claimed in claim 1, wherein said at least one holder structure (205) with said plurality of energy storage cells (204) contained therein being accommodated in an outer casing (102).

6. The energy storage device (200) as claimed in claim 1, wherein said plurality of energy storage cells (204) being electrically connected with each other through one or more interconnect plates (202, 203).

7. The energy storage device (200) as claimed in claim 1, wherein said one or more receiving portions (400) being integrally formed in at least a portion of said at least one non-rigid member (205b), said one or more receiving portions (400) being configured for holding said plurality of energy storage cells (204) in a secured position, within accepted tolerances in the dimensions of the receiving portions (400).

8. The energy storage device (200) as claimed in claim 1, wherein said one or more receiving portions (400) includes one or more slits (400a, 400b), said one or more slits (400a, 400b) being formed in at least a portion of said one or more receiving portions (400).

9. The energy storage device (200) as claimed in claim 10, wherein said one or more slits (400a, 400b) being configured to accommodate expansion of said one or more energy storage cells (204a) along at least one dimension thereof, occurrence of said expansion being probable during one of charging and discharging of said plurality of energy storage cells (204).

10. The energy storage device (200) as claimed in claim 7, wherein said at least one holder structure (205) being configured to be in direct contact with said outer casing (102) through one or more fasteners.

11. The energy storage device (200) as claimed in claim 1, wherein said at least one holder structure (205) being configured to be in direct contact with said outer casing (102) through at least one thermally conductive member.

12. The energy storage device (200) as claimed in claim 1, wherein said at least one non-rigid member (205b) being made of rubber comprising a predetermined thickness in a range of 0.5 mm to 2.0 mm.

13. A holder structure (205) configured for receiving one or more energy storage cells (204), being lithium-ion battery cells,
therein, said holder structure (205) comprising:
at least one non-rigid member (205b), said at least one non-rigid member (205b) being a flexible resin material including rubber and being overmolded to at least one rigid frame member (205a), enables said rigid frame member (205a) to form at least one side wall (401R, 401L, 402R, 402L) of said non-rigid member (205b) of said at least one holder structure (205), and said non-rigid member (205b) is in contact with said rigid frame member (205a) only at said at least one side wall;
said at least one non-rigid member (205b) includes one or more receiving portions (400) to receive at least a portion of said one or more energy storage cells (204), and
each of said plurality of energy storage cells (204) being configured to be secured in said one or more receiving portions (400) in one or more configurations.

14. The holder structure (205) as claimed in claim 15, wherein said at least one non-rigid member (205b) being a thermally conductive, electrically isolative and fire retardant rubber.

15. The holder structure (205) as claimed in claim 15, wherein said at least one rigid frame member (205a) being a thermally conductive metal.

## Patentansprüche

1. Eine Energiespeichervorrichtung (200), wobei die Energiespeichervorrichtung (200) Folgendes umfasst:
eine Vielzahl von Energiespeicherzellen, die Lithium-Ionen-Batteriezellen (204) sind; und
mindestens eine Halterungsstruktur (205), die so ausgelegt ist, dass sie eine oder mehrere Energiespeicherzellen (204a) der Vielzahl von Energiespeicherzellen (204) aufnimmt;
wobei,
die mindestens eine Halterstruktur (205) mindestens ein nicht starres Element (205b) enthält, wobei das mindestens eine nicht starre Element (205b) an mindestens ein starres Rahmenelement (205a) angeformt ist, wodurch das starre Rahmenelement (205a) in der Lage ist, mindestens eine Seitenwand (401R, 401L, 402R, 402L) des nicht starren Elements (205b) der mindestens einen Halterstruktur (205) zu bilden;
das mindestens eine nicht starre Element (205b) ein flexibles Harzmaterial einschließlich Gummi ist, einen oder mehrere Aufnahmeabschnitte (400) enthält, um mindestens einen Teil der einen oder mehreren Energiespeicherzellen (204a) aufzunehmen, und
jede der Vielzahl von Energiespeicherzellen (204) so konfiguriert ist, dass sie in dem einen oder den mehreren Aufnahmeabschnitten (400) in einer oder mehreren Konfigurationen befestigt werden kann.

2. Energiespeichervorrichtung (200) nach Anspruch 1, wobei der eine oder die mehreren Aufnahmeabschnitte (400) so konfiguriert sind, dass sie einen Durchmesser haben, der größer ist als eine Abmessung der einen oder der mehreren Energiespeicherzellen (204a) der Vielzahl von Energiespeicherzellen (204).

3. Energiespeichervorrichtung (200) nach Anspruch 1, wobei das mindestens eine nicht starre Element (205b) ein wärmeleitendes, elektrisch isolierendes und feuerhemmendes Gummi ist.

4. Energiespeichervorrichtung (200) nach Anspruch 1, wobei das mindestens eine starre Rahmenelement (205a) ein wärmeleitendes Metall ist.

5. Energiespeichervorrichtung (200) nach Anspruch 1, wobei die mindestens eine Halterungsstruktur (205) mit der Vielzahl der darin enthaltenen Energiespeicherzellen (204) in einem Außengehäuse (102) untergebracht ist.

6. Energiespeichervorrichtung (200) nach Anspruch 1, wobei die Vielzahl von Energiespeicherzellen (204) durch eine oder mehrere Verbindungsplatten (202, 203) elektrisch miteinander verbunden sind.

7. Energiespeichervorrichtung (200) nach Anspruch 1, wobei der eine oder die mehreren Aufnahmeabschnitte (400) einstückig in mindestens einem Abschnitt des mindestens einen nicht starren Elements (205b) ausgebildet sind, wobei der eine oder die mehreren Aufnahmeabschnitte (400) so konfiguriert sind, dass sie die Vielzahl von Energiespeicherzellen (204) in einer gesicherten Position innerhalb akzeptierter Toleranzen in den Abmessungen der Aufnahmeabschnitte (400) halten.

8. Energiespeichervorrichtung (200) nach Anspruch 1, wobei der eine oder die mehreren Aufnahmeabschnitte (400) einen oder mehrere Schlitze (400a, 400b) enthalten, wobei der eine oder die mehreren Schlitze (400a, 400b) in mindestens einem Teil des einen oder der mehreren Aufnahmeabschnitte (400) ausgebildet sind.

9. Energiespeichervorrichtung (200) nach Anspruch 10, wobei der eine oder die mehreren Schlitze (400a, 400b) so konfiguriert sind, dass sie eine Ausdehnung der einen oder der mehreren Energiespeicherzellen (204a) entlang mindestens einer ihrer Dimensionen zulassen, wobei das Auftreten der Ausdehnung während des Ladens oder Entladens der Vielzahl von Energiespeicherzellen (204) wahrscheinlich ist.

10. Energiespeichervorrichtung (200) nach Anspruch 7, wobei die mindestens eine Halterungsstruktur (205) so konfiguriert ist, dass sie über ein oder mehrere Befestigungsmittel in direktem Kontakt mit dem Außengehäuse (102) steht.

11. Energiespeichervorrichtung (200) nach Anspruch 1, wobei die mindestens eine Haltestruktur (205) so konfiguriert ist, dass sie über mindestens ein wärmeleitendes Element in direktem Kontakt mit dem Außengehäuse (102) steht.

12. Energiespeichervorrichtung (200) nach Anspruch 1, wobei das mindestens ein nicht starres Element (205b) aus Gummi mit einer vorbestimmten Dicke in einem Bereich von 0,5 mm bis 2,0 mm hergestellt ist.

13. Halterungsstruktur (205), die zur Aufnahme einer oder mehrerer Energiespeicherzellen (204), bei denen es sich um Lithium-Ionen-Batteriezellen handelt, konfiguriert ist, wobei die Halterungsstruktur (205) umfasst:
mindestens ein nicht starres Element (205b), wobei das mindestens eine nicht starre Element (205b) ein flexibles Harzmaterial einschließlich Gummi ist und an mindestens ein starres Rahmenelement (205a) angeformt ist, wodurch das starre Rahmenelement (205a) mindestens eine Seitenwand (401R, 401L, 402R, 402L) des nicht starren Elements (205b) der mindestens einen Halterstruktur (205) zu bilden, und das nicht starre Element (205b) nur an der mindestens einen Seitenwand mit dem starren Rahmenelement (205a) in Kontakt ist;
das mindestens eine nicht starre Element (205b) einen oder mehrere Aufnahmeabschnitte (400) enthält, um mindestens einen Teil der einen oder mehreren Energiespeicherzellen (204) aufzunehmen, und
jede der Vielzahl von Energiespeicherzellen (204) so konfiguriert ist, dass sie in dem einen oder den mehreren Aufnahmeabschnitten (400) in einer oder mehreren Konfigurationen befestigt werden kann.

14. Halterungsstruktur (205) nach Anspruch 15, wobei das mindestens eine nicht starre Element (205b) ein wärmeleitendes, elektrisch isolierendes und feuerhemmendes Gummi ist.

15. Halterungsstruktur (205) nach Anspruch 15, wobei das mindestens eine starre Rahmenelement (205a) ein wärmeleitendes Metall ist.

## Revendications

1. Dispositif de stockage d'énergie (200), ledit dispositif de stockage d'énergie (200) comprenant :
une pluralité de cellules de stockage d'énergie étant des cellules de batterie lithium-ion (204) ; et
au moins une structure de support (205) adaptée pour stocker une ou plusieurs cellules de stockage d'énergie (204a) de ladite pluralité de cellules de stockage d'énergie (204) ;
dans lequel,
ladite au moins une structure de support (205) comprend au moins un élément non rigide (205b), ledit au moins un élément non rigide (205b) étant surmoulé à au moins un élément de cadre rigide (205a), ce qui permet audit élément de cadre rigide (205a) de former au moins une paroi latérale (401R, 401L, 402R, 402L) dudit élément non rigide (205b) de ladite au moins une structure de support (205) ;
ledit au moins un élément non rigide (205b) est un matériau en résine flexible, y compris le caoutchouc, et comprend une ou plusieurs parties de réception (400) pour recevoir au moins une partie de ladite ou desdites cellules de stockage d'énergie (204a), et
chacune de ces cellules de stockage d'énergie (204) étant configurée pour être fixée dans ces parties de réception (400) dans une ou plusieurs configurations.

2. Le dispositif de stockage d'énergie (200) selon la revendication 1, dans lequel ladite ou plusieurs portions de réception (400) sont configurées pour avoir un diamètre plus grand qu'une dimension de ladite ou plusieurs cellules de stockage d'énergie (204a) de ladite pluralité de cellules de stockage d'énergie (204).

3. Dispositif de stockage d'énergie (200) selon la revendication 1, dans lequel ledit au moins un élément non rigide (205b) est un caoutchouc thermiquement conducteur, électriquement isolant et ignifuge.

4. Dispositif de stockage d'énergie (200) selon la revendication 1, dans lequel ledit au moins un élément de cadre rigide (205a) est un métal thermoconducteur.

5. Dispositif de stockage d'énergie (200) selon la revendication 1, dans lequel ladite au moins une structure de support (205) avec ladite pluralité de cellules de stockage d'énergie (204) qu'elle contient est logée dans une enveloppe extérieure (102).

6. Dispositif de stockage d'énergie (200) selon la revendication 1, dans lequel plusieurs cellules de stockage d'énergie (204) sont connectées électriquement les unes aux autres par une ou plusieurs plaques d'interconnexion (202, 203).

7. Le dispositif de stockage d'énergie (200) selon la revendication 1, dans lequel ladite ou plusieurs parties de réception (400) sont formées intégralement dans au moins une partie dudit au moins un élément non rigide (205b), ladite ou plusieurs parties de réception (400) étant configurées pour maintenir ladite pluralité de cellules de stockage d'énergie (204) dans une position sécurisée, dans des tolérances acceptées dans les dimensions des parties de réception (400).

8. Le dispositif de stockage d'énergie (200) selon la revendication 1, dans lequel ladite ou plusieurs portions de réception (400) comprend une ou plusieurs fentes (400a, 400b), ladite ou plusieurs fentes (400a, 400b) étant formées dans au moins une partie de ladite ou plusieurs portions de réception (400).

9. Le dispositif de stockage d'énergie (200) selon la revendication 10, dans lequel ladite ou plusieurs fentes (400a, 400b) sont configurées pour permettre l'expansion de ladite ou plusieurs cellules de stockage d'énergie (204a) le long d'au moins une de leurs dimensions, l'occurrence de ladite expansion étant probable pendant l'une des charges et décharges de ladite pluralité de cellules de stockage d'énergie (204).

10. Dispositif de stockage d'énergie (200) selon la revendication 7, dans lequel ladite au moins une structure de support (205) est configurée pour être en contact direct avec ladite enveloppe extérieure (102) par l'intermédiaire d'une ou plusieurs attaches.

11. Dispositif de stockage d'énergie (200) selon la revendication 1, dans lequel ladite au moins une structure de support (205) est configurée pour être en contact direct avec ladite enveloppe extérieure (102) par l'intermédiaire d'au moins un élément thermoconducteur.

12. Dispositif de stockage d'énergie (200) selon la revendication 1, dans lequel ledit au moins un élément non rigide (205b) est en caoutchouc d'une épaisseur prédéterminée comprise entre 0,5 mm et 2,0 mm.

13. Structure de support (205) configurée pour recevoir une ou plusieurs cellules de stockage d'énergie (204), à savoir des cellules de batterie au lithium-ion, ladite structure de support (205) comprenant :
au moins un élément non rigide (205b), ledit au moins un élément non rigide (205b) étant un matériau en résine flexible comprenant du caoutchouc et étant surmoulé à au moins un élément de cadre rigide (205a), permettant audit élément de cadre rigide (205a) de former au moins une paroi latérale (401R, 401L, 402R, 402L) dudit élément non rigide (205b) de ladite au moins une structure de support (205), et ledit élément non rigide (205b) est en contact avec ledit élément de cadre rigide (205a) uniquement au niveau de ladite au moins une paroi latérale ;
ledit au moins un élément non rigide (205b) comprend une ou plusieurs parties de réception (400) pour recevoir au moins une partie de ladite ou desdites cellules de stockage d'énergie (204), et
chacune de ces cellules de stockage d'énergie (204) étant configurée pour être fixée dans ces parties de réception (400) dans une ou plusieurs configurations.

14. Structure de support (205) selon la revendication 15, dans laquelle ledit au moins un élément non rigide (205b) est un caoutchouc thermiquement conducteur, électriquement isolant et ignifuge.

15. Structure de support (205) selon la revendication 15, dans laquelle au moins un élément de cadre rigide (205a) est un métal thermoconducteur.
